# EUROPEAN PATENT SPECIFICATION

(11) **EP 2 716 532 B1**
(45) Date of publication and mention of the grant of the patent: **08.04.2015**
(21) Application number: 12187667.6
(22) Date of filing: 08.10.2012
(51) Int. Cl.: B62J 17/00, B62K 11/10

(54) **Straddle-type vehicle**
Grätschsitz-Fahrzeug
Véhicule de type à enfourcher

(43) Date of publication of application: 09.04.2014
(73) Proprietor: YAMAHA MOTOR CO., LTD., Iwata-shi Shizuoka 438-8501 (JP)
(72) Inventor: Galimberti, Stefano, 20050 Gerno di Lesmo (MI) (IT)
(74) Representative: Grünecker Patent- und Rechtsanwälte PartG mbB

(56) References cited:
- EP-A1- 1 992 514
- US-A1- 2006 038 667

## Description

The present invention relates to a straddle-type vehicle, in particular, a scooter-type motorcycle, according to the preamble of claim 1. Such a straddle-type vehicle is known from EP 1 992 514 A1. Such a straddle-type vehicle comprises: a body frame; a main seat portion supported by the body frame; and a main body cover arranged below the main seat portion, so as to cover the body frame.

Such a vehicle is known from JP 2010-221908.

Generally, many scooter-type motorcycles have a structure in which a straddle seat is supported by a body frame, said straddle seat often being supported so as to swing upwards and forwards around a horizontal axis, between a first position and a second position. A storage box is often disposed below the seat, and an upper end aperture of the storage box is usually closed when the seat is in the first position, a position in which a rider can ride the scooter-type motorcycle by straddling the seat, and is accessible when the seat is in the second position, an open position.

The body frame and storage box in this type of motorcycle are usually enclosed by a cowling or main body cover. Such a main body cover is generally located below the straddle seat and formed so as to surround the outside of the body frame and the storage box. This not only allows the main body cover to protect the storage box and other in-vehicle parts located under the seat from rain, spray, road dust, debris and the like, it also improves the aerodynamics and the aesthetics of the scooter-type motorcycle. Often, this main body cover comprises left and right side body covers formed on the left and right lateral sides of the scooter-type motorcycle, and may also comprise a lower front body cover, as is the case of the vehicle disclosed within JP 2010-221908.

However, because the body covers are located under the seat of the scooter-type motorcycle, when a rider mounts or alights from the motorcycle, their feet often come into contact with the surface of the body cover, usually either as a direct impact or as a glancing blow. This causes deflection and abrasion, respectively. Accordingly, over time, damage caused by a rider's feet coming into contact with the body cover results in a weakening and deterioration of said body cover. Thus, it often becomes necessary to replace one or more of the body covers so as to ensure that the functions of the main body cover continue to be fulfilled.

On the other hand, the body covers are quite large and cumbersome, and they usually require relatively comprehensive attachment structures having a suitable strength Hence replacing a body cover so as to ensure the integrity of the main body cover can become expensive and quite difficult due to the material costs involved in manufacturing the body cover, the unwieldy nature of the cover and the complicated arrangement of its attachment points. Accordingly, the present invention is made in view of the foregoing circumstances, and it is an objective of the present invention to provide a straddle-type vehicle which has a main body cover whose integrity can be more easily maintained.

According to the present invention, such an objective is achieved by the straddle-type vehicle of claim 1. Specifically, a straddle-type vehicle known from the prior art, as discussed above, has the further feature that at least one side grill is arranged on a lateral side of the main body cover at a position below a front section of the main seat portion. Furthermore, the side grill is detachably fixed to the main body cover from the inside of the main body cover.

By arranging a side grill on the lateral side of the main body cover at a position below the front section of the main seat portion, a sacrificial element is located in the area that the rider's feet most often comes into contact with, and thus the side grill can protect the main body cover from the rider's feet. Accordingly, as the smaller side grill is cheaper to produce and easier to handle, it is thus very suitable to act as a sacrificial element arranged on the main body cover. Hence, it is easier and cheaper to replace the side grill when it is damaged, and thus maintaining the integrity of the main body cover can be easily achieved. By fixing the side grill to the main body cover from the inside, it becomes extremely difficult for any unauthorized person to detach and steal the side grill.

Preferably, the outline of the side grill does not extend beyond the outline of the main body cover when seen in a side view. As such, the ends of the side grill do not extend beyond the extremities of the main body cover in the front-rear direction of the straddle-type vehicle, and thus excess contact with the rider's feet can be avoided.

Preferably still, a portion of the side grill has a substantially convex shape when seen in a plan view, so as to protrude to the outside of the straddle-type vehicle in a lateral direction. Hence, as a portion of the side grill projects outwardly in the left-right direction of the straddle-type vehicle, the probability of the side grill being able to prevent the rider's feet from coming into contact with the main body cover is increased.

Further, the straddle-type vehicle preferably comprises a storage box arranged under the main seat portion. Accordingly, a user can store a helmet or the like under the main seat portion.

Still further, a portion of the main body cover is preferably arranged so as to be positioned between at least a portion of the storage box and at least a portion of the side grill.

Preferably, at least a first through hole is formed in at least one of the side grill and the lateral side of the main body cover. Hence, it is easier to locate the precise position for the attachment of the side grill on the lateral side of the main body cover.

Still further, at least a first tab portion is preferably formed in at least the other of the side grill and the main body cover, the first tab portion being preferably configured to protrude through the first through hole. Accordingly, not only is it easier to locate the precise position for attaching the side grill to the lateral side of the main body cover, but it is also possible to temporarily attach said side grill to said lateral side of the main body cover.

Yet further still, the first through hole is preferably formed in the lateral side of the main body cover, preferably so as to correspond with a portion of the storage box when seen in a side view, and the side grill is preferably arranged so as to cover the first through hole. Accordingly, the side grill inhibits the ingress of rain, spray, road dust or the like through the first through hole by covering the same.

Preferably, a portion of the side grill is formed as the first tab portion and is configured so as to protrude through the first through hole and overlap with the main body cover. Accordingly, the rigidity of the temporary attachment of the side grill to the lateral side of the main body cover is improved by the overlap of the first tab portion with a section of the main body cover.

Further, a portion of the side edge of the first through hole is preferably formed as a second tab portion, a second through hole is preferably formed in the first tab portion, and the second tab portion is preferably configured to protrude through the second through hole and overlap with a section of the side grill when the first tab portion protrudes through the first through hole and overlaps with a section of the main body cover. Hence, the temporary attachment of the side grill to the lateral side of the main body cover is even further strengthened.

Still further, the side grill preferably comprises a ventilation opening, the ventilation opening preferably being covered with a grill or mesh structure. Accordingly, in-vehicle parts enclosed by the main body cover can be supplied with cooling air, yet still protected from road dust, debris or the like

According to a preferred embodiment, the ventilation opening is closed by a solid cover portion. Accordingly, the side grill produced with the ventilation opening can be utilized on a straddle-type vehicle whose in-vehicle parts enclosed by the main body cover do not require cooling air, but better protection from rain, spray or the like.

The lateral side of the main body cover preferably has a significantly larger area than the side grill when seen in a side view, preferably an area between five and ten times greater than the area of the side grill. Accordingly, the material costs for manufacturing the side grill are significantly reduced in comparison to the material cost of the main body cover.

According to another preferred embodiment, the at least one side grill comprises a left side grill arranged on a left lateral side of the main body cover and a right side grill arranged on a right lateral side of the main body cover. Hence, both sides of the main body cover can be protected from the feet of the rider by the side grill.

Still further, the main body cover preferably comprises a left side body cover 11 and a right side body cover portion arranged on the left and right lateral sides of the straddle-type vehicle, respectively. This improves the ease of manufacturing and assembly of the main body cover portion.

In the following, the present invention is explained in greater detail with respect to an embodiment thereof in conjunction with the accompanying drawings, wherein:
- Figure 1:: is a side view of a scooter-type motorcycle (straddle-type vehicle) according to an embodiment of the present invention;
- Figure 2:: is a partial side view of the main body cover and the side grill of the left lateral side of the scooter-type motorcycle depicted in Figure 1;
- Figure 3a:: is a cross-section of the storage box, the main body cover and the side grill of the scooter-type motorcycle of Figure 1 seen on the line I - I,
- Figure 3b:: is a cross- section of the straddle seat and body cover of the scooter-type motorcycle of Figure 2 seen on the line II - II.
- Figure 4:: is a detailed view of the side grill of Figure 1, and
- Figure 5:: are cross-sections of the attachment portions of the side grill and a main body cover from Figure 2.

Among others, the following reference signs are used in the Figures:
- 1:: Scooter-type motorcycle (straddle-type vehicle)
- 2c:: Main body cover
- 8a:: Main seat
- 13:: First through hole
- 13a:: Second tab portion
- 14:: Side grill
- 15:: First tab portion
- 16:: Second through hole

One embodiment will be described below with reference to the accompanying drawings.

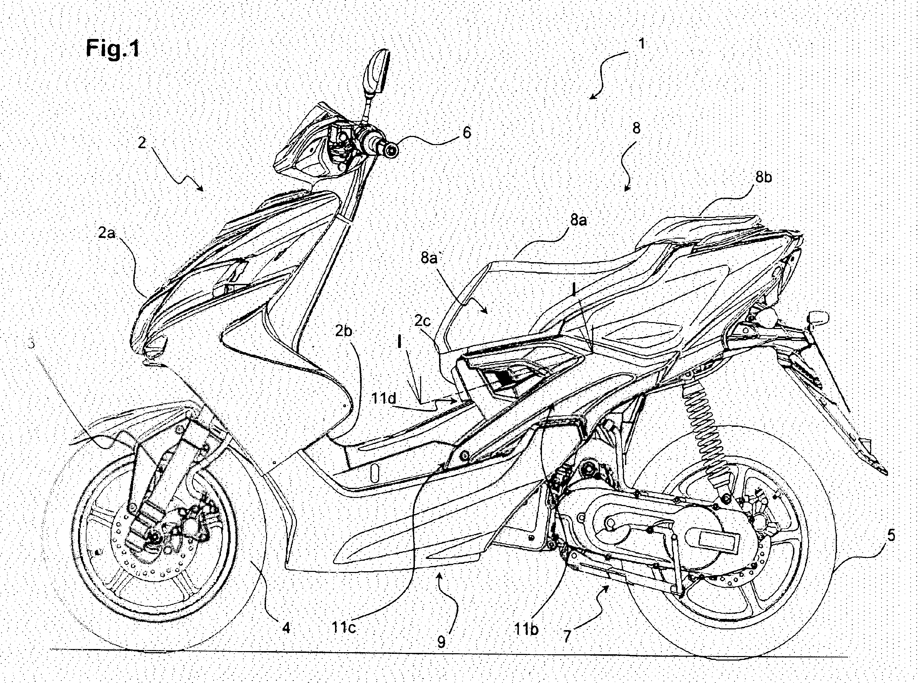

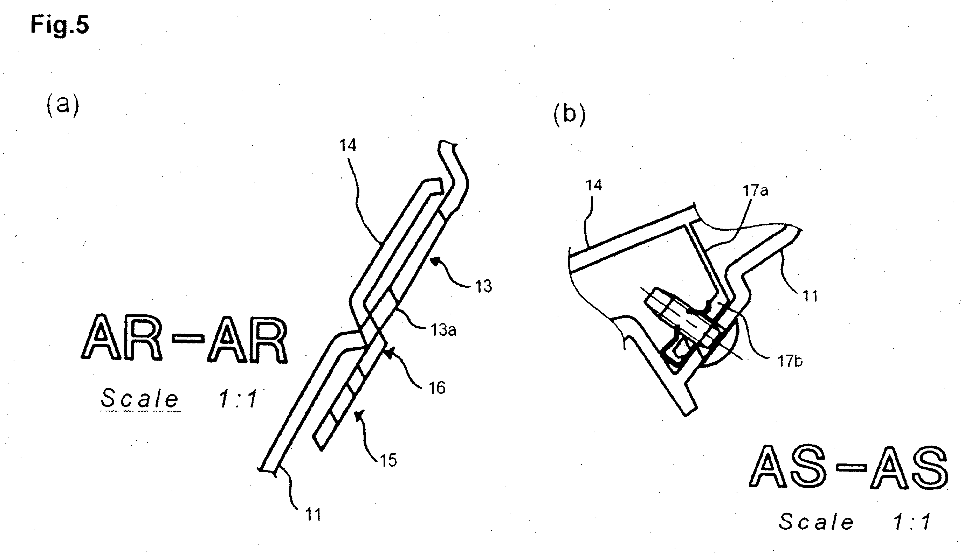

Figures 1 to 5 illustrate a scooter-type motorcycle (straddle-type vehicle), according to one embodiment. Therein, in general, a straddle-type vehicle is a vehicle having a body frame and a seat on which a rider can be seated straddling the body frame when being seated. Unless otherwise specified, the term "right", "left", "front", "rear", "up" and "down" used in this embodiment refer to the right, left, front, rear, up and down when viewed by a rider seated on the seat.

In these Figures, a reference numeral 1 designates a scooter-type motorcycle. The motorcycle 1 has: an under-bone type main body frame (not shown); a front fork 3, which is supported steerably to the left and right by a head pipe (not shown) located at a front end of the main body frame, and which places a front wheel 4 and the steering handlebars 6 at a bottom end and a top end of the front fork 3, respectively; an engine unit 7, which is mounted to the main body frame at its middle part in the front-rear direction, and which places a rear wheel 5 at a rear end of the engine unit 7; and a straddle seat 8 for a rider mounted to the main body frame above the engine unit 7.

The main body frame is provided with: a front frame, having left and right front frame sections extending from the head pipe obliquely downwards to the rear; and a rear frame (body frame) having left and right rear frame sections extending from the left and right front frame sections obliquely upward below the straddle seat 8 to the rear

The main body frame is enclosed with a resinous body cover 2. The body cover 2 has: a front cover 2a for covering the front, left and right sides of the front fork 3; a leg shield 2b, located rearward from the front cover for covering the front of the rider's legs; and a main body cover 2c for covering the rear frame beneath the straddle seat 8.

In this embodiment, the main body cover 2c comprises separate left and right side body covers 11, 11. However, the main body cover could alternatively comprise a single unitary cover piece, or even 3 or more body covers such as left, right and front side body covers.

The engine unit 7 has: an engine body fixed to the main body frame; and a transmission case, supported in a vertically swingable manner by the engine body, for transmitting engine power to the rear wheel pivotably supported at a rear end of the transmission case.

A storage box 10 is disposed on the rear frame below the straddle seat 8 when the straddle seat 8 is in the closed position. To be more specific, the storage box 10 is located between the left and right rear frame sections of the rear frame.

The storage box 10 comprises an upper surface, an upper end aperture formed in the upper surface and a container section formed below the upper end aperture and having a capacity sufficient to accommodate therein a helmet and the like. The upper surface is substantially flat and has a slight upward incline in the rearward direction. The upper end aperture is substantially oval-shaped when seen in a plan view. The container section is formed by side walls that extend in a substantially vertical direction downwards from the upper end aperture and a floor section that is formed so as to join the bottom edges of the side walls in a substantially horizontal manner.

The storage box 10 is made from a resinous material and can be formed by injection molding or the like.

As shown in Figure 1, the straddle seat 8 comprises a main seat 8a for the driver of the scooter-type motorcycle, and the rear seat 8b for a pillion passenger. The main seat 8a and the rear seat 8b have a structure in which a seat cushion is disposed on a seat bottom plate forming a lower surface and an outer surface of the seat cushion is covered with an outer cover from another surface.

In this embodiment, the main seat 8a and the rear seat 8b are formed as separate, individual portions, wherein the main seat 8a is rotatably supported at its front end, whereas the rear seat 8b is rotatably supported at its rear end However the straddle seat 8 could alternatively be formed by the main seat and the rear seat being a single unitary piece pivotably supported at either its front or rear ends or its left or right lateral sides. The straddle seat 8 could alternatively comprise only a main seat 8a, and the straddle seat 8 may not necessarily be supported in a pivotal manner, but could be supported so as to slide from an opened to a closed position.

As shown in Figure 1, a left side body cover 11 is formed on the left lateral side of the scooter-type motorcycle. Specifically, the left side body cover 11 is located below the left lateral side of the main seat 8a and above a footboard 9 for the rider's feet and the engine unit 7. Accordingly, the left side body cover 11 is formed so as to cover the portion of the rear frame that extends below the left lateral side of the main seat 8a when seen in a side view.

The left side body cover 11 made from a resinous material and can be formed by injection molding or the like.

Although not visible in Figure 1, a right side body cover is formed on the right lateral side of the scooter-type motorcycle as a mirror image to the left side body cover 11. Together, the left and right side body covers 11, 11 form the main body cover 2c. Due to the fact that the right side body cover is an exact mirror image of the left side body cover 11, the following detailed description will be restricted to said left side body cover 11, yet it is clear that it will also apply *mutatis mutandis* to the right side body cover.

An upper edge 11 a of the left side body cover 11 extends from a front end in a rearward direction in a generally horizontal plane. In this manner, the upper edge 11a substantially follows the contour of a lower surface of the front section 8a' of the main seat 8a. At the rear end of the front section 8a' of the main seat 8a, the upper edge 11 a of the left side body cover 11 forms an obtuse angle so as to extend farther in the rearward direction, yet at a slight incline to the horizontal plane. This inclined section of the upper edge 11 a extends rearwards and inclines downwards until the wheel arch of the rear wheel 3 is reached.

A lower edge 11b of the left side body cover 11 then extends from this point in a forward direction. The lower edge 11 b has a downward incline from the horizontal plane so as to generally follow the contour of the wheel arch initially and to then follow the contour of the rear section of the footboard 9. The lower edge 11 b terminates when the left side body cover 11 reaches the front section of the footboard 9.

From the termination of the lower edge 11b, a lower front edge 11c of the left side body cover 11 extends in an upward direction at an angle inclined from the vertical in the rearward direction An upper front edge 11d of the left side body cover 11 extends from the front end of the upper edge 11a in a downward direction inclined from the vertical in a rearward direction. The upper front edge 11d extends in this direction until it intersects with the lower front edge 11c, wherein the deviation from the vertical of the upper front edge 11d is less than the deviation from the vertical of the lower front edge 11c. An upper section of the upper front edge 11d of the left side body cover 11 extends in a generally lateral direction, e.g., into the page of Figure 1, so as to connect with the right side body cover portion to form the main body cover 2c.

A recess 12 is formed in the outer surface of the left side body cover 11. Specifically, the recess 12 is a concavity positioned substantially in the front half of the left side body cover 11 in the front-rear direction, under the front section 8a' of the main seat 8a. The recess 12 is formed substantially in the center of the left side body cover 11 in the up-down direction, and behind the upper front edge 11d.

A first through hole 13 is formed in the recess 12 of the left side body cover 11. Specifically, the first through hole 13 is positioned in a substantially forward portion of a base of the recess 12, and corresponds to a portion of the storage box when seen in a side view. The first through hole 13 has a substantially rectangular shape, having rounded corners, wherein the longer sides have an incline from the vertical and the shorter sides have an incline from the horizontal. Although the first through hole 13 is formed with such a shape in this embodiment, it could alternatively be formed with another shape, e.g., round, square, etc.

A second tab portion 13a is formed on a front edge, e.g., the front long side, of the first through hole 13. Specifically, the second tab portion 13a is formed with a substantially rectangular shape, having rounded corners, and protrudes generally rearwards with an upward incline from the horizontal when seen in a side view, so as to substantially correspond to the shape of the first through hole 13. Nevertheless, the second tab portion 13a is significantly smaller than the first through hole 13, having side lengths less than half the size of the corresponding side lengths of the first through hole 13.

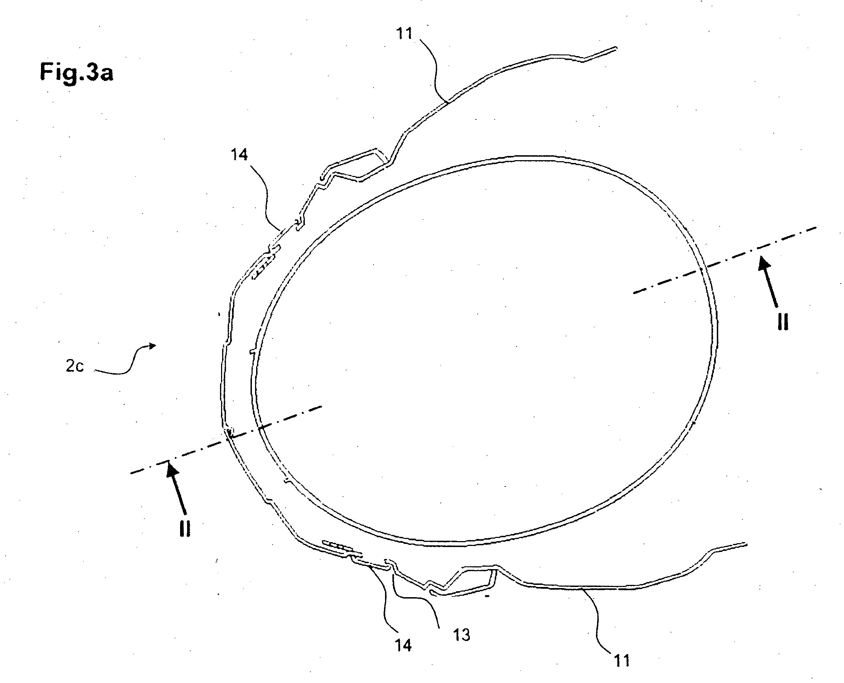

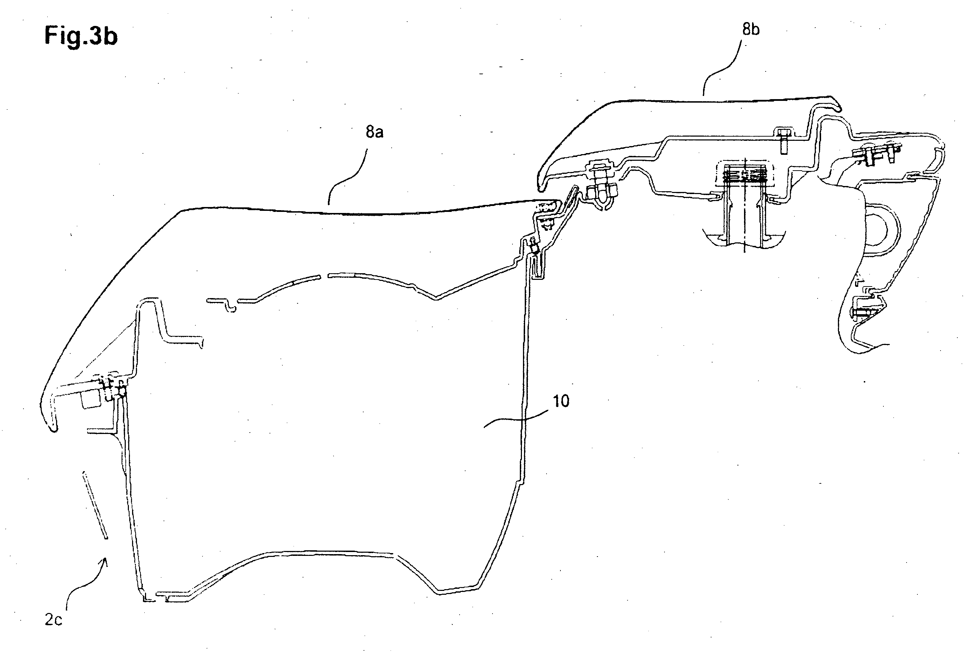

As shown in Figure 1, a side grill 14 is arranged on the left side body cover 11 so as to cover the first through hole 13. Specifically, the side grill 14 is arranged so as to fit into the recess 12 of the left side body cover 11, a the front section of the side grill 14 covers the first through hole 13 and extends rearwards so as to generally follow the outline of the recess 12 when seen in a side view of the motorcycle 1. Accordingly, as shown in Figure 3, a portion of the left side body cover 11 is formed so as to be located between a portion of the container section of the storage box 10 and a portion of the side grill 14 when seen in a plan view.

The side grill 14 is made from a resinous material and can be formed by injection molding or the like.

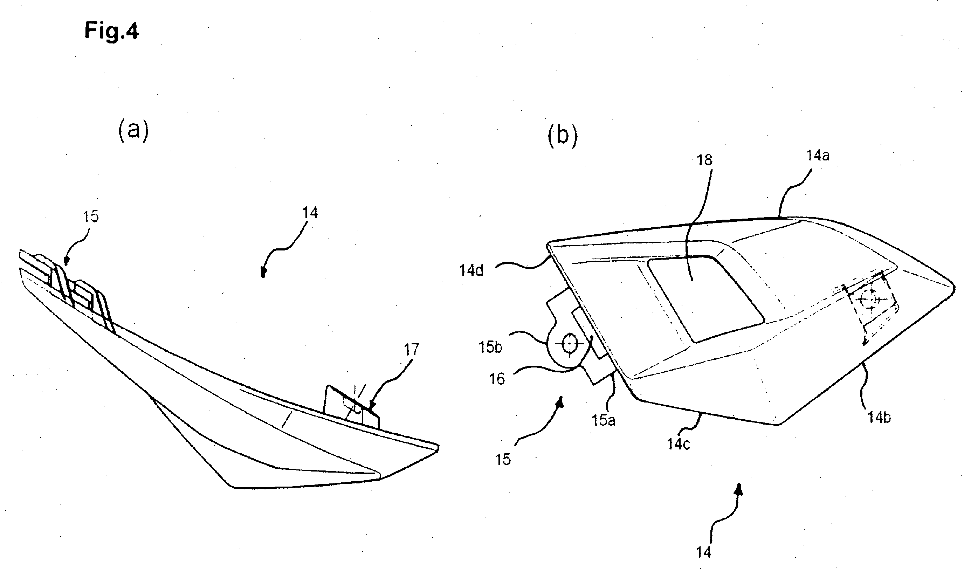

As shown in Figure 4a, the side grill 14 has a substantially convex outline when seen in a plan view. Specifically, the side grill 14 is formed so that its outer surface has a substantially protruding shape configured to protrude to the outside in a horizontal direction.

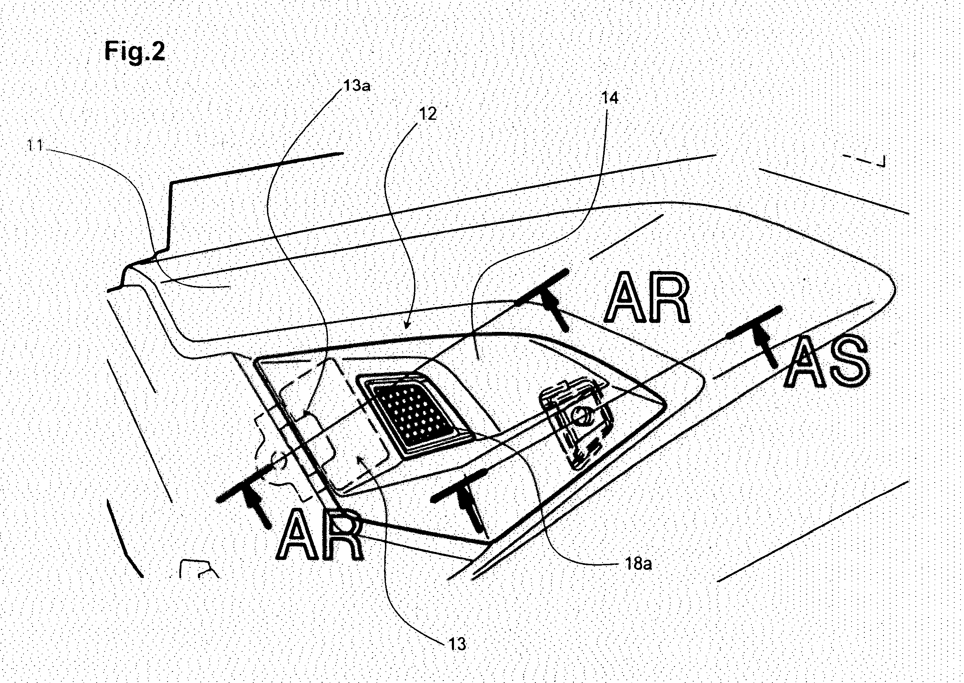

When seen from the side, the outline of the side grill 14 generally corresponds to the outline of the recess 12 formed on the left side body cover 11. As shown in Figure 2, an upper edge 14a of the side grill 14 extends from a front end in a rearward direction and follows a contour that generally corresponds to a smaller scale upper edge 11 a of the left side body cover 11. At a rear end of the upper edge 14a of the side grill 14, a rear lower edge 14b extends in the forward direction at an angle inclined downwardly from the horizontal plane. The rear lower edge 14b extends for a distance approximately 1/3 of the length of the side grill 14 in the forward direction, before an obtuse angle is formed in the lower edge of the side grill 14 and a front lower edge 14c extends in a forwards direction inclined upwardly from the horizontal plane. A front edge 14d extends from the front end of the front lower edge 14c in an upward direction inclined forward from the vertical plane so as to join with the front end of the upper edge 14a.

A first tab portion 15 is formed at the front edge 14d of the side grill 14, and a second through hole 16 is formed in said first tab portion 15. Specifically, two webs 15a, 15a spaced apart from each other in the vertical plane extend inwardly from the inner surface of the side grill 14 in the lateral direction, so as to extend beyond a lip formed by the front edge 14d of the side grill 14. The two webs 15a, 15a then extend forwards and downwards in a direction substantially perpendicular to the front edge of the side grill 14 when seen in a side view, and a cross piece 15b is formed so as to join the respective ends of the two webs 15a, 15a. The second through hole 16 is formed as the open space bordered by the two webs 15a, 15a, the cross piece 15b and the front edge 14d of the side grill 14. The cross piece 15b further comprises a screw hole for a fixing member, such as a screw or the like.

In addition to the first tab portion 15, a fixing portion 17 is formed on the inner surface of the side grill 14 at a rear portion thereof. Specifically, the fixing portion 17 comprises a web 17a that extends inwardly in a lateral direction from the inner surface of the side grill 14, and a flange 17b formed at the inner end of the web 17a at an angle substantially perpendicular thereto. A screw hole is formed in the flange 17b for a fixing member, such as a screw or the like.

To attach the side grill 14 to the left side body cover 11, the side grill 14 is slid into the recess 12 from an initial position located rearwardly of the recess 12. Specifically, the side grill 14 is initially positioned so that the first tab portion 15 can protrude through the first through hole 13 formed on the left side body cover 11. The side grill 14 is then moved in a direction substantially forwards, such that the second tab portion 13a formed on the front edge of the first through hole 13 can protrude through the second through hole 16 formed by the first tab portion 15 and the front edge 14d of the side grill 14. The side grill 14 is thus temporarily attached to the left side body cover 11. Detachable fixation can then occur by the use of suitable fixation members, such as screws, bolts, or the like, to attach the left side body cover 11 to the screw holes formed in the first tab portion 15 and the fixing portion 17 on the side grill 14.

When either detachably fixed or merely temporarily attached to the left side body cover 11, the first tab portion 15 overlaps with a portion of the main body cover 2c, and the second tab portion 13a overlaps with a portion of the side grill 14, when seen in a side view.

As shown in Figure 1, the side grill 14 is substantially smaller than the left side body cover 11. In this embodiment, the projected area of the left side body cover 11 when seen in a side view is approximately 5 times greater than the projected area of the side grill 14 when seen in a side view. However, the side grill 14 could be even smaller still, and could have a projected area up to 10 times smaller than that of the left side body cover 11.

In this embodiment, a ventilation hole 18 is formed in the side grill 14. The ventilation hole 18 is covered with a mesh portion 18a in order to inhibit the entry of road dust, debris and the like through the ventilation hole 18. Depending on the circumstances, the ventilation hole 18 may be covered with various covers that serve different purposes, e.g., a metallic grill, a resin plate with punched holes, a solid metallic plate, a solid resin plate, a metallic plate with punched holes, etc.

According to the embodiment discussed above, a scooter-type motorcycle (straddle-type vehicle) of the present invention, having a body frame, a main seat portion 8a supported by the body frame, and a main body cover 2c arranged below the main seat portion 8a so as to cover the body frame, has the further feature that at least one side grill 14 is arranged on a lateral side of the main body cover 2c at a position below a front section 8a' of the seat portion.

By arranging a side grill 14 on the lateral side of the main body cover 2c at a position below the front section 8a' of the seat portion, a sacrificial element is located in the area that the rider's feet most often comes into contact with, and thus the side grill 14 can protect the main body cover 2c from the riders feet. Accordingly as the smaller side grill 14 is cheaper to produce and easier to handle, it is thus very suitable to act as a sacrificial element arranged on the main body cover 2c. Hence, it is easier and cheaper to replace the side grill 14 when it is damaged, and thus maintaining the integrity of the main body cover 2c can be easily achieved.

In addition, as the side grill 14 is cheaper and easier to replace than an entire side cover, it becomes attractive to replace the standard side grill 18 with an after market side grill that may have an alternative material or appearance. Accordingly, it is possible to more easily and cheaply customize the straddle-type vehicle 1 using side grills of various materials and appearances.

According to the embodiment of the present invention, the outline of the side grill 14 does not extend beyond the outline of the main body cover 2c when seen in a side view. As such, the ends of the side grill 14 do not extend beyond the extremities of the main body cover 2c and consequently the rider's feet are in no way inhibited by the presence of the side grill 14, and excess contact with the rider's feet can be avoided.

According to the embodiment, a portion of the side grill 14 has a substantially convex shape when seen in a plan view, so as to protrude to the outside of the straddle-type vehicle 1 in a lateral direction. As such, the outwardly projecting portion of the side grill 14 is able to increase the likelihood that the rider's feet come into contact with the side grill 14 instead of the main body cover 2c, and thus the protection of the main body cover 2c is increased.

In this embodiment, the straddle-type vehicle comprises a storage box 10 arranged under the main seat portion 8a. Accordingly, the space under the main seat portion 8a is useful for storing a helmet or the like.

According to the embodiment, a portion of the main body cover 2c is arranged so as to be positioned between at least a portion of the storage box 10 and at least a portion of the side grill 14.

According to the embodiment, the side grill 14 is detachably fixed to the main body cover 2c from the inside of the main body cover 2c. Consequently, by fixing the side grill 14 to the main body cover 2c from the inside, it is necessary to open the main seat portion 8a and even remove the storage box 10 in some cases, to gain access to the means used to fix the side grill 14 to the straddle-type vehicle 1, e.g. screws, bolts, or the like. Hence, it becomes extremely difficult for any unauthorized person to be able to detach and steal the side grill 14

According to the embodiment, a first through hole 13 is formed in the lateral side of the main body cover 2c. Hence, it is easier to locate the precise position for the attachment of the side grill 14 on the lateral side of the main body cover 2c.

According to the embodiment, a first tab portion 15 is formed on the side grill 14, and the first tab portion 15 is configured to protrude through the first through hole 13. Accordingly, not only is it easier to locate the precise position for attaching the side grill 14 to the lateral side of the main body cover 2c, but it is also possible to temporarily attach said side grill 14 to said lateral side of the main body cover 2c.

According to the embodiment, the first through hole 13 is formed in the lateral side of the main body cover 2c, so as to correspond with a portion of the storage box when seen in a side view, and the side grill 14 is arranged so as to cover the first through hole 13. Accordingly, the side grill 14 inhibits the ingress of rain, spray, road dust or the like through the first through hole 13 by covering the same.

According to the embodiment, the portion of the side grill 14 formed as the first tab portion 15 is configured so as to protrude through the first through hole 13 and overlap with the main body cover 2c. Accordingly, the rigidity of the temporary attachment of the side grill 14 to the lateral side of the main body cover 2c is improved by the overlap of the first tab portion 15 with a section of the main body cover 2c.

According to the embodiment, a portion of the side edge of the first through hole 13 is formed as a second tab portion 13a, a second through hole 16 is formed by the first tab portion 15 and a front edge 14d of the side grill 14, and the second tab portion 13a is configured to protrude through the second through hole 16 and overlap with a section of the side grill 14 when the first tab portion 15 protrudes through the first through hole 13 and overlaps with a section of the main body cover 2c. Hence, the temporary attachment of the side grill 14 to the lateral side of the main body cover 2c is even further strengthened.

According to the embodiment, the side grill 14 comprises a ventilation opening 18 being covered with a mesh structure. Accordingly, in-vehicle parts enclosed by the main body cover 2c can be supplied with cooling air, yet still protected from road dust, debris or the like. Alternatively, the ventilation opening 18 may be closed by a solid cover portion. Accordingly, the side grill 14 produced with the ventilation opening 18 can be utilized on a straddle-type vehicle 1 whose in-vehicle parts enclosed by the main body cover 2c do not require cooling air, but better protection from rain spray or the like

According to the embodiment, the lateral side of the main body cover 2c has a projected area approximately 5 times greater than the projected area of the side grill 14 when seen in a side view. Accordingly, the material costs for manufacturing the side grill 14 are significantly reduced in comparison to the material cost of the main body cover 2c.

According to the embodiment, the at least one side grill 14 comprises a left side grill 14 arranged on a left lateral side of the main body cover 2c and a right side grill 14 arranged on a right lateral side of the main body cover 2c. Hence, both sides of the main body cover 2c can be protected from the feet of the rider by the side grill 14.

According to the embodiment, the main body cover 2c comprises a left side body cover 11 and a right side body cover portion arranged on the left and right lateral sides of the straddle-type vehicle, respectively. This improves the ease of manufacturing and assembly of the main body cover 2c portion.

## Claims

1. Straddle-type vehicle (1) comprising:
a body frame;
a main seat portion (8a) supported by the body frame; and
a main body cover (2c) arranged below the main seat portion (8a) so as to cover the body frame;
**characterized in that**
at least one side grill (14) is arranged on a lateral side of the main body cover (2c) at a position below a front section (8a') of the main seat portion (8a), and
the side grill (14) is detachably fixed to the main body cover (2c) from the inside of the main body cover (2c).

2. Straddle-type vehicle according to claim 1, wherein the outline of the side grill (14) does not extend beyond the outline of the main body cover (2c) when seen in a side view.

3. Straddle-type vehicle (1) according to claim 1 or 2, wherein a portion of the side grill (14) has a substantially convex shape when seen in a plan view, so as to protrude to the outside of the straddle-type vehicle (1) in a lateral direction.

4. Straddle-type vehicle (1) according to any one of claims 1 to 3, wherein the straddle-type vehicle (1) further comprises a storage box (10) arranged under the main seat portion (2), and a portion of the main body cover (2c) is preferably arranged so as to be positioned between at least a portion of the storage box (10) and at least a portion of the side grill (14).

5. Straddle-type vehicle (1) according to any one of claims 1 to 4, wherein at least a first through hole (13) is formed in at least one of the side grill (14) and the lateral side of the main body cover (2c).

6. Straddle-type vehicle (1) according to claim 5, wherein at least a first tab portion (15) is formed in at least the other of the side grill (14) and the main body cover (2c), the first tab portion (15) being configured to protrude through the first through hole (13).

7. Straddle-type vehicle (1) according to claim 5 or 6, wherein the first through hole (13) is formed in the lateral side of the main body cover (2c), preferably so as to correspond with a portion of the storage box (10) when seen in a side view, and the side grill (14) is arranged so as to cover the first through hole (13)

8. Straddle-type vehicle (1) according to claim 7, wherein a portion of the side grill (14) is formed as the first tab portion (15) and is configured so as to protrude through the first through hole (13) and overlap with a section of the main body cover (2c).

9. Straddle-type vehicle (1) according to claim 8, wherein a portion of a side edge of the first through hole (13) is formed as a second tab portion (13a), a second through hole (16) is formed in the first tab portion (15), and the second tab portion (13a) is configured to protrude through the second through hole (16) and overlap with a section of the side grill (14) when the first tab portion (15) protrudes through the first through hole (13) and overlaps with a section of the main body cover (2c).

10. Straddle-type vehicle according to any one of the previous claims, wherein the side grill (14) further comprises a ventilation opening (18), the ventilation opening preferably being covered with a grill or mesh structure (18a).

11. Straddle-type vehicle (1) according to claim 10, wherein the ventilation opening (18) is closed by a solid cover portion.

12. Straddle-type vehicle (1) according to any one of the previous claims, wherein the lateral side of the main body cover (2c) has a significantly larger projected area than the side grill (14) when seen in a side view, preferably an area between 5 and 10 times greater than the area of the side grill (14).

13. Straddle-type vehicle (1) according to any one of the previous claims, wherein the at least one side grill (14) comprises a left side grill (14) arranged on a left lateral side of the main body cover (2c) and a right side grill (14) arranged on a right lateral side of the main body cover (2c).

14. Straddle-type vehicle (1) according to any one of the previous claims, wherein the main body cover (2c) comprises a left side cover (11) and a right side cover (11) arranged on the left and right lateral sides of the straddle-type vehicle, respectively.

## Patentansprüche

1. Spreizsitz-Fahrzeug (1), das umfasst:
einen Karosserierahmen;
einen Haupt-Sitzabschnitt (8a), der von dem Karosserierahmen getragen wird; und
eine Haupt-Körperabdeckung (2c), die unterhalb des Haupt-Sitzabschnitts (8a) so angeordnet ist, dass sie den Karosserierahmen abdeckt;
**dadurch gekennzeichnet, dass**
wenigstens eine Seitenverkleidung (14) an einer Längsseite der Haupt-Körperabdeckung (2c) an einer Position unterhalb eines vorderen Teilabschnitts (8a') des Haupt-Sitzabschnitts (8a) angeordnet ist, und
die Seitenverkleidung (14) von der Innenseite der Haupt-Körperabdeckung (2c) her abnehmbar an der Haupt-Körperabdeckung (2c) befestigt ist.

2. Spreizsitz-Fahrzeug nach Anspruch 1, wobei sich der Umriss der Seitenverkleidung (14), in Seitenansicht gesehen, nicht über den Umriss der Haupt-Körperabdeckung (2c) hinaus erstreckt.

3. Spreizsitz-Fahrzeug (1) nach Anspruch 1 oder 2, wobei ein Abschnitt der Seitenverkleidung (14), in Draufsicht gesehen, eine im Wesentlichen konvexe Form hat und in einer Querrichtung zur Außenseite des Spreizsitz-Fahrzeugs (1) vorsteht.

4. Spreizsitz-Fahrzeug (1) nach einem der Ansprüche 1 bis 3, wobei das Spreizsitz-Fahrzeug (1) des Weiteren einen Aufbewahrungsbehälter (10) umfasst, der unter dem Haupt-Sitzabschnitt (2) angeordnet ist, und ein Abschnitt der Haupt-Körperabdeckung (2c) vorzugsweise so angeordnet ist, dass er zwischen wenigstens einem Abschnitt des Aufbewahrungsbehälters (10) und wenigstens einem Abschnitt der Seitenverkleidung (14) positioniert ist.

5. Spreizsitz-Fahrzeug (1) nach einem der Ansprüche 1 bis 4, wobei wenigstens ein erstes Durchgangsloch (13) in der Seitenverkleidung (14) oder/und der Längsseite der Haupt-Körperabdeckung (2c) ausgebildet ist.

6. Spreizsitz-Fahrzeug (1) nach Anspruch 5, wobei wenigstens ein erster Laschenabschnitt (15) wenigstens an dem anderen Teil, d. h. der Seitenverkleidung (14) oder der Haupt-Körperabdeckung (2c), ausgebildet ist und der erste Laschenabschnitt (15) so gestaltet ist, dass er durch das erste Durchgangsloch (13) vorsteht.

7. Spreizsitz-Fahrzeug (1) nach Anspruch 5 oder 6, wobei das erste Durchgangsloch (13) in der Längsseite der Haupt-Körperabdeckung (2c) vorzugsweise so ausgebildet ist, dass es, in Seitenansicht gesehen, einem Abschnitt des Aufbewahrungsbehälters (10) entspricht, und die Seitenverkleidung (14) so angeordnet ist, dass sie das erste Durchgangsloch (13) abdeckt.

8. Spreizsitz-Fahrzeug (1) nach Anspruch 7, wobei ein Abschnitt der Seitenverkleidung (14) als der erste Laschenabschnitt (15) ausgebildet und so gestaltet ist, dass er durch das erste Durchgangsloch (13) vorsteht und sich mit einem Teilabschnitt der Haupt-Körperabdeckung (2c) überlappt.

9. Spreizsitz-Fahrzeug (1) nach Anspruch 8, wobei ein Abschnitt einer Seitenkante des ersten Durchgangslochs (13) als ein zweiter Laschenabschnitt (13a) ausgebildet ist, ein zweites Durchgangsloch (16) in dem ersten Laschenabschnitt (15) ausgebildet ist und der zweite Laschenabschnitt (13a) so gestaltet ist, dass er durch das zweite Durchgangsloch (16) vorsteht und sich mit einem Teilabschnitt der Seitenverkleidung (14) überlappt, wenn der erste Laschenabschnitt (15) durch das erste Durchgangsloch (13) vorsteht und sich mit einem Teilabschnitt der Haupt-Körperabdeckung (2c) überlappt.

10. Spreizsitz-Fahrzeug (1) nach einem der vorangehenden Ansprüche, wobei die Seitenverkleidung (14) des Weiteren eine Lüftungsöffnung (18) umfasst und die Lüftungsöffnung vorzugsweise mit einer Gitter- oder Netzstruktur (18a) abgedeckt ist.

11. Spreizsitz-Fahrzeug (1) nach Anspruch 10, wobei die Lüftungsöffnung (18) mit einem massiven Abdeckungsabschnitt verschlossen ist.

12. Spreizsitz-Fahrzeug (1) nach einem der vorangehenden Ansprüche, wobei die Längsseite der Hauptkörper-Abdeckung (2c), in Seitenansicht gesehen, eine erheblich größere projizierte Fläche hat als die Seitenverkleidung, vorzugsweise eine Fläche, die zwischen 5- und 10-mal größer ist als die Fläche der Seitenverkleidung (14).

13. Spreizsitz-Fahrzeug (1) nach einem der vorangehenden Ansprüche, wobei die wenigstens eine Seitenverkleidung (14) eine linke Seitenverkleidung (14), die an einer linken Längsseite der Haupt-Körperabdeckung (2c) angeordnet ist, und eine rechte Seitenverkleidung (14) umfasst, die an einer rechten Längsseite der Haupt-Körperabdeckung (2c) angeordnet ist.

14. Spreizsitz-Fahrzeug (1) nach einem der vorangehenden Ansprüche, wobei die Haupt-Körperabdeckung (2c) eine Abdeckung (11) der linken Seite und eine Abdeckung (11) der rechten Seite umfasst, die an der linken bzw. rechten Längsseite des Spreizsitz-Fahrzeugs angeordnet sind.

## Revendications

1. Véhicule de type à enfourcher (1), comprenant :
un châssis de corps ;
une partie de siège principale (8a) supportée par le châssis de corps ; et
un carénage de corps principal (2c) agencé sous la partie de siège principale (8a) de manière à recouvrir le châssis de corps ;
**caractérisé**
**en ce qu'**au moins une grille latérale (14) est agencée sur un côté latéral du carénage de corps principal (2c) à une position sous une section avant (8a') de la partie de siège principale (8a), et
**en ce que** la grille latérale (14) est fixée de manière amovible au carénage de corps principal (2c) à partir de l'intérieur du carénage de corps principal (2c) .

2. Véhicule de type à enfourcher selon la revendication 1, dans lequel le contour de la grille latérale (14) ne s'étend pas au-delà du contour du carénage de corps principal (2c) en vue de côté.

3. Véhicule de type à enfourcher (1) selon la revendication 1 ou 2, dans lequel une partie de la grille latérale (14) présente une forme sensiblement convexe en vue en plan, de manière à ressortir vers l'extérieur du véhicule de type à enfourcher (1) en direction latérale.

4. Véhicule de type à enfourcher (1) selon l'une quelconque des revendications 1 à 3, dans lequel le véhicule de type à enfourcher (1) comprend en outre un coffre de rangement (10) agencé sous la partie de siège principale (2), et une partie du carénage de corps principal (2c) est de préférence agencée de manière à être positionnée entre au moins une partie du coffre de rangement (10) et au moins une partie de la grille latérale (14).

5. Véhicule de type à enfourcher (1) selon l'une quelconque des revendications 1 à 4, dans lequel au moins un premier trou traversant (13) est formé dans au moins un élément parmi la grille latérale (14) et le côté latéral du carénage de corps principal (2c).

6. Véhicule de type à enfourcher (1) selon la revendication 5, dans lequel au moins une première partie de patte (15) est formée sur au moins l'autre élément parmi la grille latérale (14) et le carénage de corps principal (2c), la première partie de patte (15) étant configurée pour ressortir à travers le premier trou traversant (13).

7. Véhicule de type à enfourcher (1) selon la revendication 5 ou 6, dans lequel le premier trou traversant (13) est formé dans le côté latéral du carénage de corps principal (2c), préférablement de manière à correspondre à une partie du coffre de rangement (10) en vue de côté, et la grille latérale (14) est agencée de manière à recouvrir le premier trou traversant (13).

8. Véhicule de type à enfourcher (1) selon la revendication 7, dans lequel une partie de la grille latérale (14) forme la première partie de patte (15), est configurée de manière à ressortir à travers le premier trou traversant (13), et présente un chevauchement avec une section du carénage de corps principal (2c).

9. Véhicule de type à enfourcher (1) selon la revendication 8, dans lequel une partie d'un bord latéral du premier trou traversant (13) forme une deuxième partie de patte (13a), un deuxième trou traversant (16) est formé dans la première partie de patte (15), et la deuxième partie de patte (13a) est configurée pour ressortir à travers le deuxième trou traversant (16) et présente un chevauchement avec une section de la grille latérale (14) quand la première partie de patte (15) ressort à travers le premier trou traversant (13) et présente un chevauchement avec une section du carénage de corps principal (2c).

10. Véhicule de type à enfourcher selon l'une quelconque des revendications précédentes, dans lequel la grille latérale (14) comprend en outre une ouverture de ventilation (18), l'ouverture de ventilation étant de préférence recouverte par une grille ou une structure maillée (18a).

11. Véhicule de type à enfourcher (1) selon la revendication 10, dans lequel l'ouverture de ventilation (18) est fermée par une partie de carénage solide.

12. Véhicule de type à enfourcher (1) selon l'une quelconque des revendications précédentes, dans lequel le côté latéral du carénage de corps principal (2c) présente une surface projetée significativement supérieure à celle de la grille latérale (14) en vue de côté, soit de préférence une surface entre 5 et 10 fois supérieure à la surface de la grille latérale (14).

13. Véhicule de type à enfourcher (1) selon l'une quelconque des revendications précédentes, dans lequel ladite au moins une grille latérale (14) comprend une grille latérale gauche (14) agencée sur un côté latéral gauche du carénage de corps principal (2c) et une grille latérale droite (14) agencée sur un côté latéral droit du carénage de corps principal (2c).

14. Véhicule de type à enfourcher (1) selon l'une quelconque des revendications précédentes, dans lequel le carénage de corps principal (2c) comprend un carénage latéral gauche (11) et un carénage latéral droit (11) respectivement agencés sur les côtés latéraux gauche et droit du véhicule de type à enfourcher.
